**Europäisches Patentamt**

**European Patent Office**

**Office européen des brevets**

(19)

(11) Veröffentlichungsnummer : **0 177 863**
**B1**

(12) **EUROPÄISCHE PATENTSCHRIFT**

(45) Veröffentlichungstag der Patentschrift :
27.07.88

(51) Int. Cl.⁴ : **G 03 B 27/53**

(21) Anmeldenummer : **85112317.4**

(22) Anmeldetag : **28.09.85**

(54) Verfahren und Vorrichtung zum Kopieren fotografischer Kopiervorlagen.

(30) Priorität : **10.10.84 DE 3437222**

(43) Veröffentlichungstag der Anmeldung :
**16.04.86 Patentblatt 86/16**

(45) Bekanntmachung des Hinweises auf die Patenterteilung : **27.07.88 Patentblatt 88/30**

(84) Benannte Vertragsstaaten :
**CH DE FR IT LI**

(56) Entgegenhaltungen :
**EP-A- 0 054 848**
**DD-A-    44 942**
**DE-A- 2 543 904**
**DE-A- 2 738 236**
**DE-A- 2 912 130**
**DE-A- 3 205 898**

(73) Patentinhaber : **Agfa-Gevaert AG**
**Patentabteilung**
**D-5090 Leverkusen 1 (DE)**

(72) Erfinder : **Nitsch, Wilhelm, Dr.**
**Werdenfelsstrasse 39**
**D-8000 München 70 (DE)**
Erfinder : **Treiber, Helmut, Dr.**
**Bertelestrasse 67**
**D-8000 München 71 (DE)**
Erfinder : **Benker, Gerhard**
**Haydnstrasse 1**
**D-8023 Pullach (DE)**

EP 0 177 863 B1

Jouve, 18, rue St-Denis, 75001 Paris, France

## Beschreibung

Die Erfindung betrifft ein Verfahren und eine Vorrichtung zum Kopieren fotografischer Kopiervorlagen nach dem Oberbegriff des Anspruchs 1.

In der DE-A-29 12 130 ist ein Verfahren und eine Vorrichtung zum Kopieren fotografischer Kopiervorlagen von einem Vorlagenstreifen mit einer Anzahl von Kopiervorlagen bekannt. In dem dort beschriebenen Kopiergerät ist längs des Filmlaufweges für zu einem langen Band zusammengeklebte Einzelfilme eine Abtaststation vorgesehen, in der die Farbdichtewerte für jeden Bereich der Kopiervorlagen eines Filmes abgetastet und einem Speicher zugeführt werden. Gleichzeitig läuft der zugehörige Film in einen mechanischen Speicher ein, der zwischen der Abtaststation und der Kopierstation angeordnet ist. Ein Rechner bestimmt nun aus der Gesamtmenge der Farbverhältnisse in den einzelnen Vorlagenbereichen unter Ausscheiden oder geringerem Gewichten von Vorlagenbereichen mit einer erkennbaren Farbdominante sogenannte Farbdichtedifferenzkurven oder filmspezifische Werte, die einen ersten Hinweis auf die für diesen Vorlagenstreifen erforderlichen Belichtungswerte geben. Aufgrund der Meßwerte aus den Bereichen der gerade zum Kopieren anstehenden Vorlage werden sogenannte vorlagenspezifische Werte ermittelt und aus den filmspezifischen und den vorlagenspezifischen Werten die Kopierlichtmengen in den einzelnen Farben ermittelt. Dieses Berechnungsverfahren liefert auf Anhieb eine sehr hohe Ausbeute an verkaufsfähigen Kopien. Mit dem zeitlich parallel ablaufenden Abtasten und Kopieren wird eine außerordentlich hohe Kopierleistung erreicht, womit jedoch auch ein hoher apparativer Aufwand verbunden ist. Insbesondere bei Kopiergeräten, denen eine Entwicklungseinrichtung für die belichteten Bilder unmittelbar nachgeschaltet ist, ist wegen der begrenzten Kapazität der Entwicklungsvorrichtung eine so hohe Kopierleistung nicht ausnutzbar.

Ferner sind aus der DD-A-44 942 in ihrer Transportrichtung umschaltbare Vorlagenbühnen bekannt.

Aufgabe der Erfindung ist es, auch bei einer geringeren Kopierleistung die Vorteile der Ganzfilmmessung zu nutzen, ohne einen entsprechend hohen apparativen Aufwand treiben zu müssen.

Diese Aufgabe wird gelöst durch die im Anspruch 1 beschriebene Erfindung. Bei dem erfindungsgemäßen Arbeitsverfahren werden Abtast- und Kopiervorgang nicht räumlich, sondern zeitlich getrennt. Der Film wird zunächst durch die Abtaststation in der ersten Bewegungsrichtung vollständig abgetastet und in einen mechanischen Speicher eingespeichert. Der Kopierschritt erfolgt dann in umgekehrter Reihenfolge der Vorlagen unter Herausziehen aus dem Speicher und Vorbeiführen in der entgegengesetzten Richtung an der Kopierstation. Damit ist der Vorteil verbunden, daß der Film zunächst mit hoher Geschwindigkeit vollständig abgetastet werden kann. Dabei kann eine Bedienungsperson anwesend sein, die eventuell zu überspringende Vorlagen kennzeichnet, einzelne zu kopierende Vorlagen heraushebt usw.. Wenn der Rücklauf und damit der Kopiervorgang beginnt, so kann dieser automatisch und ohne eine Bedienungsperson ablaufen, wobei die Geschwindigkeit der Kopiervorgänge ganz auf die Leistungsfähigkeit der nachgeschalteten Entwicklungsvorrichtung abgestellt sein kann. Die Zeit der Bedienungsperson wird dabei nicht mehr in Anspruch genommen; diese kann z. B. in dieser Zeit einen bereits vorher abkopierten Auftrag endbearbeiten, d. h., verpacken und mit Preisen versehen.

Eine Vorrichtung zur Durchführung des erfindungsgemäßen Verfahrens ergibt sich aus den Ansprüchen 2 bis 10 im Zusammenhang mit der Beschreibung eines Ausführungsbeispiels, das anhand von Figuren eingehend erläutert ist. Es zeigen :

Fig. 1 den Mittelbereich eines erfindungsgemäß gestalteten Kopiergerätes in der Frontansicht, teilweise geschnitten und

Fig. 2 das Kopiergerät nach Anspruch 1 in der Seitenansicht aus Sicht der Schnittlinie II-II in Fig. 1.

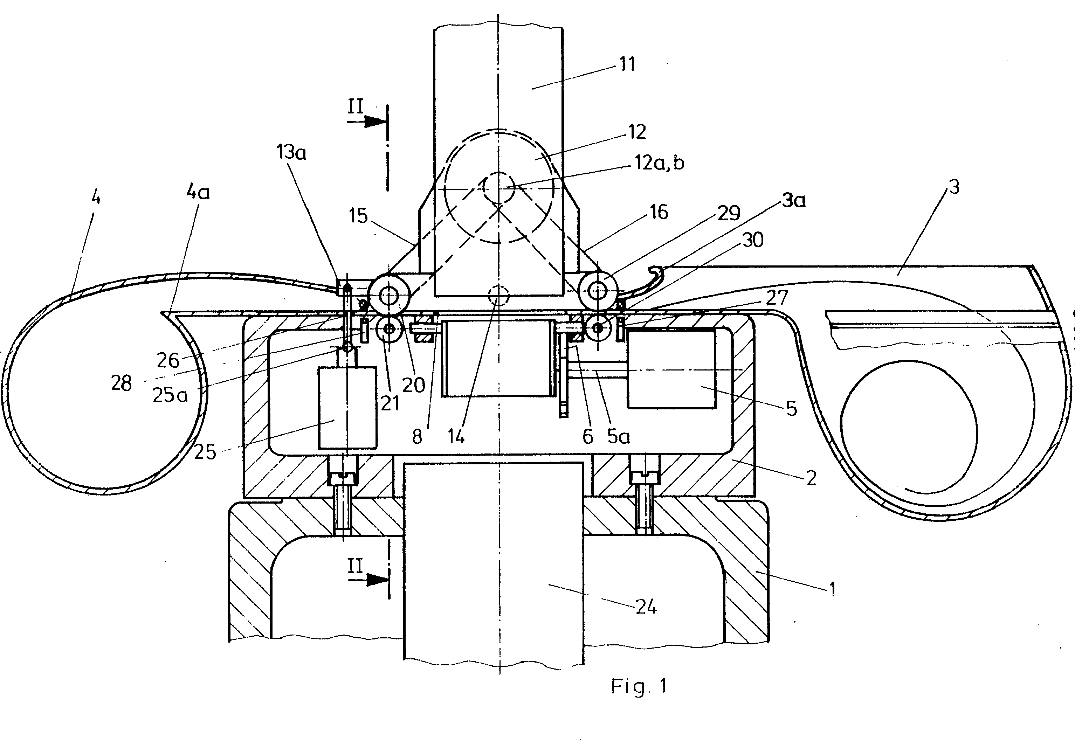

In Fig. 1 ist mit 1 ein Teil des Maschinengestells bezeichnet, das die eigentliche Vorlagenbühne 2, ein im wesentlichen hohles, kastenförmiges Teil trägt. Auf der rechten Seite des Teiles 2 ist eine Einlegeschale 3 angebracht, die aus einem im wesentlichen halben kreiszylindrischen, oben offenen Speicherteil und einer Einführungsschute 3a zu einem ersten Transportrollenpaar 29, 30 besteht, dessen Anordnung und Antrieb noch eingehend beschrieben wird.

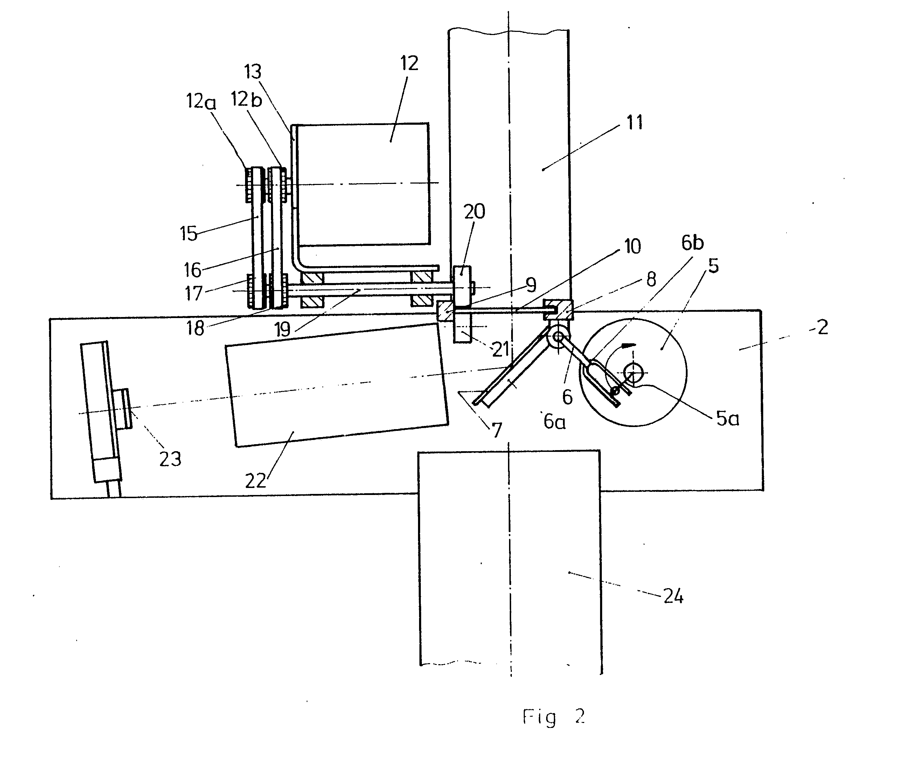

Hinter dem Transportrollenpaar 29, 30 beginnt eine Filmführung, bestehend aus zwei Schienen 8 und 9 mit liegendem, einander zugewendetem U-Profil. Wie insbesondere aus Fig. 2 zu ersehen ist, zeigt die hintere Schiene 9 im Bereich der Transportrollen 20, 21 und 29, 30 Aussparungen, die den Angriff der Rollen am Film 10 zulassen. Die Filmführungsschienen 8, 9 erstrecken sich über ein Kopierfenster hinweg nach links zu einem zweiten Antriebsrollenpaar 20, 21 hinter dem die Schienen übergehen in einen nach unten führenden kreiszylindrischen Speicherraum 4, dessen Durchmesser so groß bemessen ist, daß ein normaler Kleinbildfilm mit maximaler Bildzahl bzw. Länge ohne größere Schwierigkeiten eingeschoben werden kann. Dazu entspricht sein Durchmesser wenigstens der doppelten Breite des Filmes 10. Der Übergang von den Schienen 8, 9 in das Innere des Speicherraumes 4 erweitert sich trompetenförmig, um in der Ausziehphase ein Herausführen des Films ohne Kratzgefahr zu ermöglichen. Um Kratzer vollständig zu vermeiden, kann auch die vorspringende Zunge 4a mittig ausgespart sein bzw. mit Aussparungen im Bereich der Bildinformation versehen sein. Schließlich könnte auch eine Aufwickelfeder im Inneren des Speicherraumes 4 vorgesehen sein. Im Bereich der einlaufseitigen Transportrollen 29, 30 ist eine erste Lichtschranke 27 vorgesehen, die den vorlaufenden Filmrand aufgrund unterschiedlicher Absorption erfassen kann, während im Bereich der auslaufseitigen Transportrollen 20, 21 vor dem Speicherraum 4 eine weitere Lichtschranke 28 vorgesehen ist.

Wie insbesondere in der Seitenansicht nach Fig. 2 erkennbar, ist der gesamte Antrieb auf einer um eine gerätefeste Achse 14 schwenkbaren Wippe 13 angeordnet. Auf dieser sitzt mittig ein Motor 12, z. B. ein Schrittmotor, der in seiner Drehrichtung umsteuerbar ist. Auf der Welle des Motors 12 sitzen zwei Zahnriemenscheiben 12a und 12b nebeneinander, über die je ein Zahnriemen 15 und 16 läuft. Die Zahnriemen laufen auf der anderen Seite über zwei Zahnriemenscheiben 17 und 18, die über Wellen 19 mit den Transportrollen 20, 29 gekuppelt sind.

In Fig. 1 ist ein Stoßmagnet 25 dargestellt, der über einen Koppelhebel 26 mit einem Arm 13a der Wippe 13 verbunden ist. Auf der Gegenseite ist eine entsprechende Rückholfeder angeordnet, die jedoch der besseren Übersicht wegen nicht dargestellt ist. Wird der Stoßmagnet 25 bestromt, so wird die Wippe 13 im Uhrzeigersinn verschwenkt, so daß die Rolle 29 neben der Einlegeschale 3 mit ihrer Gegendruckrolle 30 in Eingriff kommt, während die dem Speicherraum 4 benachbarte, auslaufseitige Rolle 20 von ihrer Gegendruckrolle so weit abgehoben wird, daß der Film ohne Bremsung durchlaufen kann. Wird dagegen der Magnet 25 wieder stromlos gemacht, bewegt sich die Wippe unter der Wirkung der nicht gezeigten Feder im Gegensinn des Uhrzeigers so, daß die linke Rolle 20 im Eingriff ist und die rechte Rolle 29 von ihrer Gegendruckrolle 30 abhebt.

Unterhalb der Kopieröffnung befindet sich, wie aus Fig. 2 zu ersehen ist, ein unter annähernd 45° geneigter Spiegel 7, der in der gezeigten Stellung zusammen mit einem Vario-Objektiv 22 den auszumessenden Bereich der Kopiervorlage 10 im Kopierfenster auf eine lichtelektrische Meßeinrichtung 23 wirft. Diese lichtelektrische Einrichtung besteht aus einer Zeile von z. B. zehn fotoelektrischen Zellen — von der Seite her kontaktiert — von denen je eine in einer der drei Farben sensibilisiert ist. Die Abfragung der Zeilen 23 durch den zugehörigen Rechner erfolgt in einem Rhythmus, der auf die Transportgeschwindigkeit des Films 10 in der Bühne abgestimmt ist, so daß im wesentlichen für jeweils einen quadratischen Bereich ein Meßwert in jeder der drei Farben ermittelt wird. Weitere Einzelheiten einer solchen Abtasteinrichtung ergeben sich aus der DE-A-33 39 958.

Der Spiegel 7 ist an dem Schenkel 6a eines Winkelhebels 6 befestigt, der um eine Achse schwenkbar ist, die an der Filmführungsschiene 8 befestigt ist. Der andere Schenkel 6b des Winkelhebels 6 trägt einen gabelförmigen Mitnehmer, in den ein Kurbelzapfen an dem Schwingarm 5a eines Drehmagneten 5 eingreift. Die Gabel 6b und die Kurbel 5a bilden zusammen ein Totpunktgetriebe, bei dem insbesondere die gezeigte wirksame Stellung des Spiegels ohne Erschütterung und genau eingestellt wird. Wird dagegen die Kurbel 5a um etwa 90° in Richtung des Uhrzeigersinns verdreht, bewegt sich der Spiegel 7a aus dem Strahlengang des Kopiergerätes. Oberhalb des Kopierfensters befindet sich ein Spiegelschacht 11, der, in bekannter Weise von einer Lichtquelle herkommend, das Kopierlicht gut gemischt und homogenisiert auf den Vorlagenstreifen 10 wirft. Die Kopierlichtquelle dient deshalb zugleich zur Ausleuchtung der Vorlage während des Abtastvorgangs. Damit wird neben einer Vereinfachung erreicht, daß meßtechnisch auszugleichende eventuelle Intensitätsunterschiede zweier Lichtquellen nicht auftreten.

Unterhalb des Spiegels 7 ist der obere Teil eines Vario-Objektivs 24 angedeutet, der jeweils den Vorlagenstreifen 10 formatfüllend auf ein Kopiermaterialband im unteren Teil des Kopiergerätes abbildet.

In der Figur aus Gründen der Übersichtlichkeit nicht dargestellt ist ein Taster, der in Löchern oder Randkerben am Filmstreifen 10 eingreift, um in der Kopierphase jeweils den Vorlagenstreifen 10 mit einer Vorlage im Kopierfenster stillzusetzen. Schließlich könnte an der Filmlaufbahn auch ein Fenster für die Kontrolle des Steges an der Kante des Bildfensters vorgesehen sein und eine Markiereinrichtung, um in lagegerechter Positionierung Markierungen wie Randkerben anzubringen.

Die Wirkungsweise der beschriebenen Einrichtung ist wie folgt :

Zunächst wird von der Bedienungsperson ein Filmstreifen 10 mit der Schichtseite nach unten in die Schale 3 eingelegt, wobei das vorlaufende Ende des Films mit den Fingern auf der Auflagefläche aufliegend zwischen das erste Transportrollenpaar 29, 30 eingeschoben wird. Nach dem Durchlaufen des Filmanfangs durch die Lichtschranke 27 wird die Wippe 13 in die Stellung gebracht, in der das erste Rollenpaar 29, 30 schiebend wirksam ist. Gleichzeitig beginnt der Motor mit dem Transport des Films von rechts nach links mit gleichmäßiger Geschwindigkeit. In dieser Phase hält der Drehmagnet 5 den Spiegel 7 in der in Fig. 2 dargestellten, wirksamen Stellung. Ein sich quer zur Transportrichtung des Vorlagenstreifens 10 erstreckender streifenförmiger Bereich der Kopiervorlage wird deshalb über den Spiegel 7 und das Objektiv 22 auf die lichtempfindliche Einrichtung 23 mit dem entsprechenden Maßstab abgebildet. Die Abfrage der nebeneinander liegenden, lichtempfindlichen Elemente erfolgt dabei mit einem solchen Tempo, daß der Filmtransport in einem Abtastintervall den Vorlagenstreifen 10 gerade so weit verschiebt, daß sich die abgetasteten Bereiche lückenlos aneinandersetzen.

Ferner kann durch Auswertung der Randkerben bzw. der der Bildlage zugeordneten Löcher der Bereich des Steges mit den unmittelbar angrenzenden schmalen Randbereichen von der Berücksichtigung durch Unterbrechung der Leitung an den Rechner ausgeschlossen werden.

Mit dem Einlaufen des vorlaufenden Filmrandes in den Strahlengang der Lichtschranke 28 wird der Magnet 25 betätigt, der die Wippe 13 umschaltet. Durch deren Bewegung entgegen dem Uhrzeigersinn wird die Transportrolle 20 neben der Lichtschranke 28 an ihre Gegenlaufrolle angepreßt und damit wirksam, während die Transportrolle 29 neben der Lichtschranke 27 abgehoben und unwirksam wird. Nachdem die Motordrehrichtung nicht geändert wurde, zieht die nunmehr wirksame Rolle den Film und erreicht dadurch eine höhere Transportsicherheit.

Falls die Umschaltung von Schieben auf Ziehen den Abtastrhythmus beeinträchtigt, kann durch geeignete Speichermittel der Umschaltvorgang bis zum Durchlaufen des nächsten Bildsteges durch den Abtastbereich verzögert werden. Das für die fotoelektrische Messung der Filmdichte erforderliche Licht kommt dabei durch den Mischschacht 11 von der Lichtquelle, die auch während des Kopiervorganges benutzt wird. Die Kopierfilter sind dabei jedoch nicht im Strahlengang. Auch wenn der Spiegel 7 den Kopierlichtstrahlengang völlig abschließt, ist zur Steuerung der Belichtung zusätzlich ein Verschluß vorgesehen.

Die Abtastung der Dichtewerte in den einzelnen Bereichen der Vorlagen wird fortgesetzt, bis das nachlaufende Ende des Filmes durch die Lichtschranke 27 signalisiert wird und die noch in der Abtastung befindliche Kopiervorlage den Abtastbereich überlaufen hat. Dann erfolgt die Drehrichtungsumschaltung des Motors 12, ohne daß die Wippe ihre Stellung verändert. Der Film wird deshalb wieder in Richtung der Einlegeschale 3 gefördert, wobei jedoch die Abtasteinrichtung für die Positionsmarken zur Steuerung des Vorschubs wirksam gemacht wird. Dadurch kommt die zuletzt abgetastete Kopiervorlage als erste in Kopierstellung. Gleichzeitig mit der Umschaltung der Drehrichtung des Motors 12 erfolgt auch die Umschaltung des Drehmagneten 5, der den Spiegel 7 aus dem Strahlengang ausschwenkt. Das Objektiv 24 bildet nun mit einem entsprechenden Abbildungsmaßstab die Vorlage 10 im Kopierfenster formatfüllend auf den nicht dargestellten Streifen von lichtempfindlichem Kopiermaterial ab, sobald der Verschluß geöffnet wird.

Die durch den Rechner errechneten Belichtungszeiten durch die weißes Licht aussendenden Lichtquelle werden realisiert durch zunächst weiße Belichtung und dann jeweils zur Beendigung einer Farbbelichtung durch Einschwenken eines komplementärfarbigen Filters in den Strahlengang zwischen Lichtquelle und Mischschacht 11. Mit dem Ende der drei Belichtungszeiten wird auch der Verschluß betätigt, das Papier fortgeschaltet und der Film um eine Vorlagenlänge nach rechts in Richtung Ablageschale 3 befördert.

Mit dem Eintritt des nunmehr vorlaufenden Filmendes in den Strahlengang der Lichtschranke 27 erfolgt das Umschalten der Wippe 13, so daß im folgenden der Film in Richtung Ablageschale 3 durch die nunmehr auslaufseitige Rolle 29 durch das Kopierfenster gezogen wird. Wegen der begrenzten Leistungsfähigkeit der nachfolgenden Entwicklungseinrichtung wird der Kopiervorgang verhältnismäßig langsam ablaufen, d. h., es treten u. U. zwischen den einzelnen Belichtungen gewisse Wartezeiten ein. In diesen muß zwar der Vorlagen- und Papiertransport erfolgen, jedoch wird häufig die zur Verfügung stehende Zeit hierfür nicht benötigt. Wegen der hohen Treffsicherheit des auf der Auswertung des gesamten Filmes beruhenden Belichtungssteuerverfahrens ist jedoch die Einwirkung der Bedienungsperson in der Kopierphase nicht erforderlich. Die Bedienungsperson kann sich deshalb in dieser Zeit der Kontrolle bereits fertig entwickelter Bilder und der Abfertigung und Verpackung dieser Aufträge zuwenden. Damit ist eine sehr effiziente Arbeitsweise möglich.

Die Filmführungsschienen 8 und 9 können zur Verarbeitung unterschiedlicher Filmformate zueinander hin verstellbar sein oder auch auswechselbar, wenn die Lage der Abtaster für die verschiedenen Marken in Zuordnung zur Vorlage dies erforderlich machen.

Der Rechner zur Aufnahme der von der Abtasteinrichtung 23 gelieferten Meßwerte und zur Errechnung der effektiven Belichtungszeiten in den einzelnen Farben kann dabei ein Mikroprozessor üblicher Bauart sein, z. B. der Rechner Falcon, der von der Firma Digital Equipment geliefert wird. Dieser Rechner kann auch die übrigen Steuerungsaufgaben durch Auswertung der Signale der Lichtschranken 27, 28 und des Kerbentasters übernehmen.

Falls von der Bedienungsperson einzelne Vorlagen ausgewählt kopiert werden sollen, kann auch diese Aufgabe von dem Rechner übernommen werden, der durch Zählen der Bildmarken Platzziffern an die Vorlagen vergibt.

**Patentansprüche**

1. Verfahren zum Kopieren fotografischer Kopiervorlagen aus einem Vorlagenstreifen mit einer Anzahl von Kopiervorlagen, wobei durch fotoelektrische Abtastung einer größeren Anzahl der Vorlagen des Streifens sogenannte filmspezifische und aus der jeweils zu kopierenden Vorlage vorlagenspezifische Werte gewonnen und aus den beiden, für alle abgetasteten Vorlagen gespeicherten Wertegruppen die Kopierlichtmengen für jede Vorlage berechnet werden, dadurch gekennzeichnet, daß in einem ersten Arbeitsschritt die kopierfähigen Vorlagen eines Streifens bis zu dessen Ende in einer ersten Transportrichtung an der Abtasteinrichtung vorbeigeführt und in eine Speichervorrichtung eingeführt werden, daß in einem zweiten Arbeitsschritt die Vorlagen des Streifens in der der ersten entgegengesetzten Transportrichtung einzeln aus der Speichervorrichtung heraus einer Kopierstation in umgekehrter Reihenfolge wie bei der Abtastung zugeführt und kopiert werden.

2. Vorrichtung zur Durchführung des Verfahrens nach Anspruch 1 mit einer Vorlagentransporteinrichtung und einer fotoelektrischen Abtasteinrichtung, dadurch gekennzeichnet, daß eine Vorlagenbühne die in der Transportrichtung umschaltbare Vorlagentransporteinrichtung (12, 20, 29) aufweist und daß sich in der ersten Transportrichtung an die Vorlagenbühne ein im wesentlichen kreiszylindrischer Speicherraum (4) zum Einschieben des Filmes (10) anschließt.

3. Vorrichtung zur Durchführung des Verfahrens nach Anspruch 1 mit einer Vorlagentransporteinrichtung, die im ihrer Transportrichtung umschaltbar ist, einem Speicherraum (4), in den die Vorlagen in der ersten Transportrichtung eingeführt werden und einer fotoelektrischen Abtasteinrichtung, dadurch gekennzeichnet, daß die Abtasteinrichtung (7, 22, 23) in der Kopierstation angeordnet ist und die Kopierlichtquelle auch zur Abtastung dient.

4. Vorrichtung nach Anspruch 3, dadurch gekennzeichnet, daß in dem Kopierlichtstrahlengang ein Klappspiegel (7) für die Dauer des Abtastvorganges einschwenkbar ist, der die Abbildung eines Vorlagenstreifens quer zur Transportrichtung mittels eines Objektivs (22) auf eine Zeile oder drei farbsensibilisierte Zeilen von lichtempfindlichen Zellen (23) ermöglicht.

5. Vorrichtung nach Anspruch 4, dadurch gekennzeichnet, daß der Klappspiegel (7) von einem Drehmagnet (5) über ein Totpunktgetriebe (5a, 6b) angetrieben und der Drehmagnet (5) mit der Steuerung der Vorlagentransporteinrichtung so gekoppelt ist, daß der Drehmagnet (5) den Klappspiegel (7) nur während des Vorlagentransports in der ersten Transportrichtung einschwenkt.

6. Vorrichtung nach einem der Ansprüche 2 bis 5, dadurch gekennzeichnet, daß die umschaltbare Transporteinrichtung zwei angetriebene Transportrollen (20, 29) beiderseits der Kopierstation umfaßt, die an einen gemeinsamen, in der Drehrichtung umsteuerbaren Motor (12) angeschlossen sind, der mit den angetriebenen Rollen (20, 29) auf einer Wippe (13) sitzt, die über einen Magnet (25) wechselweise je eine der Rollen (20, 29) an ihre freilaufenden Gegendruckrollen (21, 30) andrückt.

7. Vorrichtung nach Anspruch 6, dadurch gekennzeichnet, daß in der ersten Transportrichtung vor der Kopierstation, insbesondere im Bereich der einlaufseitigen Transportrolle (29), ein erster Fühler (27) für das Filmende angeordnet ist, der das Ende der Abtastphase anzeigt und die Umschaltung des Motors (12) nach Beendigung der Abtastung der gerade abzutastenden Vorlage bewirkt.

8. Vorrichtung nach einem der Ansprüche 6 bis 7, dadurch gekennzeichnet, daß im Bereich der dem Speicherraum (4) benachbarten Transportrolle ein zweiter Fühler (28) für den vorlaufenden Filmanfang vorgesehen ist, der das Umschalten der Wippe (13) von Schieben auf Ziehen des Films bewirkt.

9. Vorrichtung nach einem der Ansprüche 6 bis 8, dadurch gekennzeichnet, daß ein weiterer Taster für den Vorlagenkanten zugeordnete, abtastbare Marken wie Kerben oder Löcher zur Steuerung des Abtastvorgangs und des Transports zwischen den Kopiervorgängen vorgesehen ist.

10. Vorrichtung nach einem der Ansprüche 6 bis 9, dadurch gekennzeichnet, daß im Bereich der einlaufseitigen Transportrolle eine Betrachtungsöffnung mit einer Stegmarke, eine Konstantschritt-Transporteinrichtung und eine Markiervorrichtung in entsprechender Lage vorgesehen sind.

**Claims**

1. Process for printing photographic printing originals from a strip of originals containing a number of originals to be printed, in which, by photoelectrically scanning a relatively large number of the originals in the strip, so-called film-specific values are obtained and original-specific values are obtained from the original to be printed in each case and the printing light quantities for each original are calculated from the two groups of values stored for all of the originals scanned, characterised in that, in a first working step, the printable originals of a strip are guided past the scanning device in a first direction of transportation, up to the end of the strip, and are introduced into a storage device, in that in a second working step the originals of the strip are passed, in the direction of transportation opposite to the first direction of transportation, individually from the storage device to a printing station and printed in the reverse order to that in which they were scanned.

2. Apparatus for carrying out the process according to Claim 1, having a transporting device for the originals and a photoelectric scanning device, characterised in that a platform for the originals comprises the original-transporting device (12, 20, 29), the transporting direction of which can be reversed, and in that an essentially circularly cylindrical storage chamber (4) for the insertion of the film (10) follows on from the platform for the originals in the first direction of transportation.

3. Apparatus for carrying out the process according to Claim 1, having a transporting device for the originals, the transporting direction of which can be reversed, a storage chamber (4), into which the originals are introduced in the first direction of transportation and a photoelectric scanning device, characterised in that the scanning device (7, 22, 23) is arranged in the printing station and the printing light source is also used for the scanning process.

4. Apparatus according to Claim 3, characterised in that a tiltable mirror (7) can be pivoted into the path of the printing light rays for the duration of the scanning process, which mirror allows the projection, with the aid of a lens (22) and transversely to the direction of transportation, of a strip of originals on to one row or three colour-sensitised rows of light-sensitive cells (23).

5. Apparatus according to Claim 4, characterised in that the tiltable mirror (7) is driven by a rotary magnet (5) via a dead centre transmission (5a, 6b) and the rotary magnet (5) is coupled with the control means of the original-transporting device in such a way that the rotary magnet (5) pivots the tiltable mirror (7) into position only during the transportation of the originals in the first direction of transportation.

6. Apparatus according to one of Claims 2 to 5, characterised in that the reversible transporting device comprises two driven transporting rollers (20, 29) on both sides of the printing station, which are connected to a joint motor (12) whose direction of rotation can be reversed, which motor is mounted, together with the driven rollers (20, 29), on a rocker (13) which alternately presses, via a magnet (25), one of the rollers (20, 29) against its freely running counter-pressure rollers (21, 30).

7. Apparatus according to Claim 6, characterised in that a first feeler (27) for the end of the film is arranged in front of the printing station in the first direction of transportation, in particular in the region of the transporting roller (29) on the feed side, which feeler indicates the end of the scanning phase and actuates the reversal of the motor (12) after the completion of the scanning of the original about to be scanned.

8. Apparatus according to one of Claims 6 to 7, characterised in that in the region of the transporting roller adjacent to the storage chamber (4) a second feeler (28) is provided for the advancing beginning end of the film, which feeler actuates the reversal of the rocker (13) from pushing to pulling the film.

9. Apparatus according to one of Claims 6 to 8, characterised in that a further feeler is provided for scannable marks such as notches or holes assigned to the edges of the originals for the control of the scanning process and of the transportation between the printing operations.

10. Apparatus according to one of Claims 6 to 9, characterised in that in the region of the transporting roller on the feed side an observation opening with a divider mark, a constant pace transporting device and a marking device are provided in appropriate positions.


**Revendications**

1. Procédé de copie d'originaux photographiques à partir d'une bande de film comportant un certain nombre d'originaux à copier, un balayage photoélectrique d'un grand nombre d'originaux de la bande permettant de déterminer des valeurs spécifiques du film et à partir de l'original à copier, des valeurs spécifiques de l'original, et à partir de ces deux groupes de valeurs mis en mémoire pour tous les originaux analysés, de calculer les quantités de lumière de copie pour chaque original, caractérisé en ce que dans une première étape, les originaux à copier d'une bande sont acheminés jusqu'à son extrémité dans un premier sens de transport, jusqu'au dispositif de balayage, et introduits dans un dispositif de stockage, en ce que dans une deuxième étape, les originaux de la bande sont extraits un à un du dispositif de stockage, dans le sens opposé au premier sens de transport, acheminés vers un poste de copie dans l'ordre inverse à celui du balayage et sont copiés.

2. Dispositif de mise en œuvre selon le procédé de la revendication 1, comportant un dispositif de transport des originaux et un dispositif de balayage photoélectrique, caractérisé en ce qu'un porte-original présente un dispositif de transport des originaux (12, 20, 29) de sens de transport commutable et en ce que dans le premier sens de transport, une enceinte de stockage (4) à peu près cylindrique, circulaire, destinée à l'introduction du film (10), prolonge le porte-original.

3. Dispositif de mise en œuvre du procédé selon la revendication 1, comportant un dispositif de transport des originaux dont le sens de transport est commutable, une enceinte de stockage (4) dans laquelle sont introduits les originaux, dans le premier sens de transport, ainsi qu'un dispositif de balayage photoélectrique, caractérisé en ce que le dispositif de balayage (7, 22, 23) est disposé dans le poste de copie et en ce que la source lumineuse de copie sert aussi au balayage.

4. Dispositif selon la revendication 3, caractérisé en ce qu'un miroir rabattable (7) peut pivoter dans le faisceau de rayons lumineux de copie, pendant la durée de l'opération de balayage, le miroir (7) permettant la reproduction d'une bande d'originaux, perpendiculairement au sens de transport, au moyen d'un objectif (22), sur une rangée, ou des rangées sensibilisées aux trois couleurs, de cellules photosensibles (23).

5. Dispositif selon la revendication 4, caractérisé en ce que le miroir rabattable (7) est entraîné par un aimant rotatif (5), par l'intermédiaire d'un mécanisme à point mort (5a, 6b), et en ce que l'aimant rotatif (5) est couplé à la commande du dispositif de transport des originaux de telle sorte que l'aimant rotatif (5) ne fait pivoter le miroir rabattable (7) que pendant le transport des originaux dans le premier sens de transport.

6. Dispositif selon l'une des revendications 2 à 5, caractérisé en ce que le dispositif de transport commutable comporte deux rouleaux de transport (20, 29) entraînés des deux côtés du poste de copie, raccordés à un moteur (12) commun dont le sens de rotation peut être inversé et qui est monté, avec les rouleaux (20, 29) entraînés, sur une bascule (13) qui presse alternativement l'un des rouleaux (20, 29) contre leurs rouleaux de contre-pression (21, 30) tournant librement, par l'intermédiaire d'un aimant (25).

7. Dispositif selon la revendication 6, caractérisé en ce que dans le premier sens de transport, en amont du poste de copie, notamment dans la zone du rouleau de transport (29) côté entrée, il est disposé un premier capteur (27) pour l'extrémité du film qui détecte la fin de la phase de balayage et commande l'inversion du sens de rotation du moteur (12) après achèvement du balayage de l'original en cours d'analyse.

8. Dispositif selon l'une des revendications 6 et 7, caractérisé en ce que dans la zone du rouleau de transport voisin de l'enceinte de stockage (4), il est prévu un deuxième capteur (28) pour le début du film, qui commande le passage de la bascule (13) de la poussée à la traction du film.

9. Dispositif selon l'une des revendications 6 à 8, caractérisé en ce qu'il est prévu un autre palpeur pour des repères détectables, tels que des encoches ou des perforations, associés aux bords de l'original, destiné à commander l'opération de balayage et le transport entre les opérations de copie.

10. Dispositif selon l'une des revendications 6 à 9, caractérisé en ce que dans la zone du rouleau de transport côté entrée, il est prévu une ouverture d'observation avec un repère d'espacement, un dispositif de transport à pas constant ainsi qu'un dispositif de marquage en position convenable.

Fig. 1

Fig 2

0 177 863